# EUROPEAN PATENT APPLICATION

(11) **EP 1 209 821 A1**
(43) Date of publication of application: **29.05.2002**
(21) Application number: 00942370.8
(22) Date of filing: 28.06.2000
(51) Int. Cl.: H04B 7/15, H01Q 3/26

(54) **SATELLITE COMMUNICATION SYSTEM**

(71) Applicant: MITSUBISHI DENKI KABUSHIKI KAISHA, Tokyo 100-8310 (JP)
(72) Inventor: YONEZAWA, Rumiko c/o Mitsubishi Denki Kabushiki K., Tokyo 100-8310 (JP); CHIBA, Isamu c/o Mitsubishi Denki Kabushiki Kaisha, Tokyo 100-8310 (JP); ISO, Akio, c/o Mitsubishi Denki Kabushiki Kaisha, Tokyo 100-8310 (JP)
(74) Representative: Nicholls, Michael John
(86) International application number: JP0004252
(87) International publication number: WO0201753

(57) **Abstract**

An object of the present invention is to achieve a satellite communication system which is compatible with a terrestrial wireless communication system, and which is excellent in availability in wide areas, in easiness in setting communications links or channels, and in wide-band characteristics, and which is capable of achieving large-capacity transmission with small-sized terminals in land regions as well as the minimization of interference to terrestrial wireless communication system in sea regions and in aerial regions. To achieve this object, the satellite communication system includes, as satellite antenna beams irradiated from the communication device installed on the satellite toward the earth, a first satellite antenna beam irradiating an inner oceanic region at least including and contacting a land, and a second satellite antenna beam irradiating only an outer oceanic region which is in contact with the inner oceanic region. The first and second satellite antenna beams together constitute a communication service area. The frequency of the first satellite antenna beam is set to be higher and wider in band than that of the second satellite antenna beam.

## Description

### TECHNICAL FIELD

The present invention relates to a satellite communication system, and more specifically to a wireless channel configuration between a satellite and earth stations.

### BACKGROUND ART

In order for a majority of known satellite communication systems to achieve communication systems of mutual complementation on the land and the sea, satellite mobile terminals on the land and satellite mobile terminals on the sea have used different frequencies in the same allowed frequency band.

Moreover, part of the satellite mobile communication frequency band have had a limit to application areas on land and on inland sea due to a limitation to meet requirements for the permissible value of interference to be given to existing terrestrial wireless or radio communication systems (permissible value of interference to other systems).

Therefore, satellite communication systems in the future require a new wireless channel configuration method for configuring new wireless communication channels or links between satellites and earth stations, which is able to satisfy the permissible value of interference to other systems such as terrestrial radio or wireless communication systems, and which has a wide application area and is more economical.

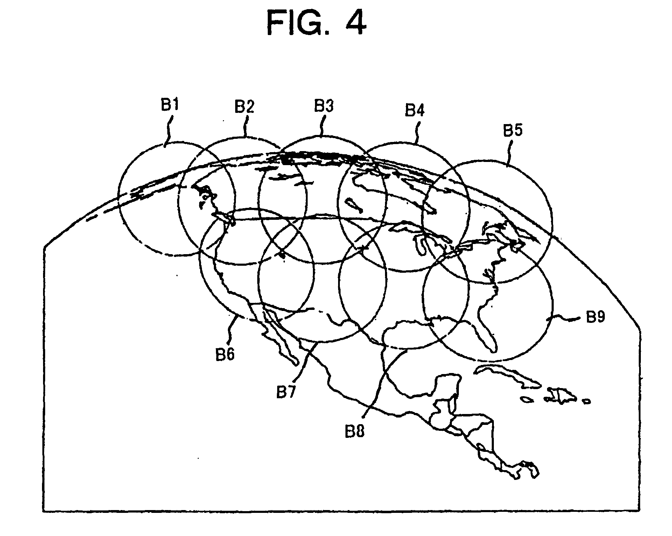

Fig.4 is an illustration of a publication entitled "System Trade Off for a North American Mobile Satellite" (B. P. Cox J. Zacharatos, B. Williamson, C. Morgan, J. R. G. Cox; Spar Aerospace Limited, AIAA 12th International Communication Satellite Systems Conference, March 13-17, 1988/ Arlington, Virginia), which depicts an arrangement configuration of satellite antenna beams providing satellite mobile communication services in a band of 1.5 GHz in North America.

In the above arrangement of satellite antenna beams, one satellite antenna beam B7 irradiates only a part of a land. The remaining seven satellite antenna beams B1 through B6, B8 and B9 irradiate parts of the land and parts of the sea.

The frequency of the satellite antenna beam B7, which irradiate s only the land, and the frequencies of the satellite antenna beams B1 through B6, B8 and B9, which irradiate both regions including the land and the sea, are of the same band of 1.5 GHz, and hence it is difficult to miniaturize satellite mobile terminals and greatly increase their transmission capacities because of the limitation on the permissible value of interference to other terrestrial wireless communication systems.

The satellite communication systems have features such as large service areas, easiness in settings of communication lines or links, high reliability, etc., and hence are well adapted for telecommunication systems and are now in the course of development. However, as long as problems such as the reduction of interference given to terrestrial wireless communication systems, i.e., reduction in giving interference (minimization of interference to other systems), the reduction of interference received from terrestrial wireless communication systems (minimization of interference from other systems), the expansion of transmission bands, and an increase in capacity are not resolved, there is little possibility of satellite communication systems developing in a large scale while being compatible with terrestrial wireless communication systems.

The present invention is intended to obviate the problems as referred to above, and has for its object to achieve a satellite communication system which is compatible with terrestrial wireless communication systems, and which is excellent in availability in wide areas, in easiness in setting communication links or channels, and in wide-band characteristics, and which is capable of achieving large-capacity transmission with small-sized terminals in land regions as well as the minimization of interference to terrestrial wireless communication systems in sea regions and in aerial regions.

### DISCLOSURE OF THE INVENTION

A satellite communication system according to the present invention, in which communications are carried out between a communication device installed on a satellite and earth stations through wireless channels formed therebetween, is characterized in that it comprises, as a satellite antenna beam irradiated from the communication device installed on the satellite toward the earth, a first satellite antenna beam irradiating an inner oceanic region at least including and contacting a land, and a second satellite antenna beam irradiating only an outer oceanic region which is in contact with said inner oceanic region, and that said first and second satellite antenna beams together constitute a communication service area, and that the frequency of said first satellite antenna beam is set to be higher and wider in band than that of said second satellite antenna beam.

In addition, the first satellite antenna beam is characterized in that it irradiates the inner oceanic region including one or more lands.

Moreover, the first satellite antenna beam is characterized in that it irradiates the inner oceanic region including a land having only a part of its periphery in contact with the inner oceanic region.

Further, the first satellite antenna beam is characterized in that it irradiates the inner oceanic region including a land having two or more parts of its periphery in contact with the inner oceanic region.

### BRIEF DESCRIPTION OF THE DRAWING

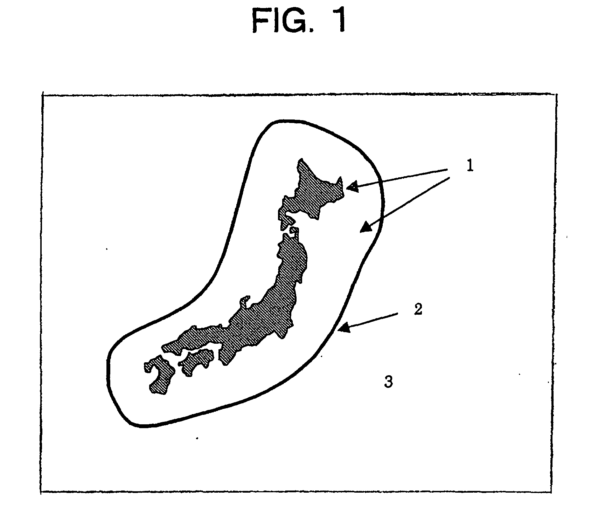

Fig. 1 is an explanatory view illustrating an example of the arrangement of a compound satellite antenna beam comprising a satellite antenna beam directed to an inner ocean including one or more lands, and a satellite antenna beam directed to an outside ocean while taking Japan as an example;

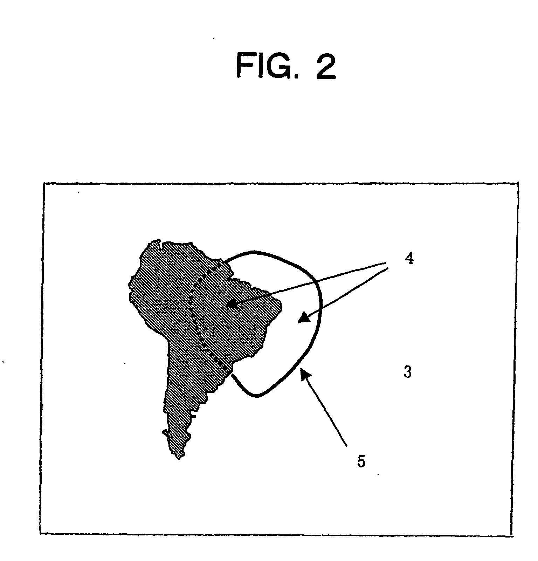

Fig. 2 is an explanatory view illustrating an example of the arrangement of a compound satellite antenna beam comprising a satellite antenna beam directed to an inner ocean including a land having a part of its periphery in contact with the inner ocean, and a satellite antenna beam directed to an outside ocean while taking South America as an example;

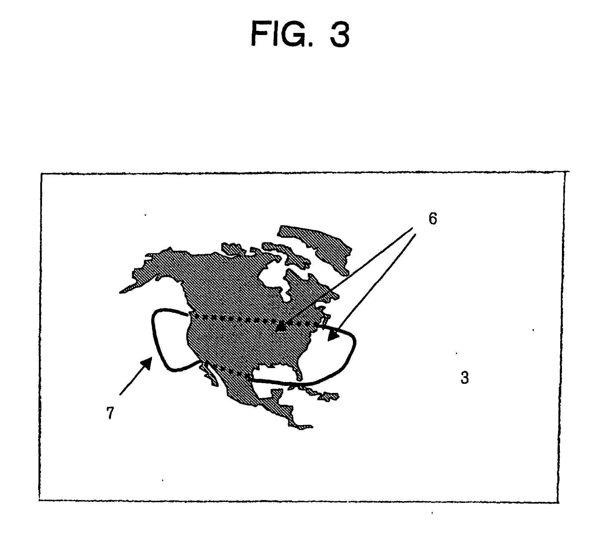

Fig. 3 is an explanatory view illustrating an example of the arrangement of a compound satellite antenna beam comprising a satellite antenna beam directed to an inner ocean including a land having two or more parts of its periphery in contact with an ocean, and a satellite antenna beam directed to an outside ocean while taking North America as an example; and
Fig. 4 is an explanatory view illustrating the configuration of an arrangement of a satellite antenna beam which provides satellite mobile communication services in a 1.5 GHz band in North America.

### THE BEST MODE FOR IMPLEMENTING THE INVENTION

### EMBODIMENT 1.

According to a first embodiment of the present invention, a satellite communication system, in which communications are carried out between a communication device installed on a satellite and earth stations through wireless or radio communication channels or links formed therebetween, constitutes a communication service area by arranging a compound antenna beam comprising, as satellite antenna beams irradiated from the communication device installed on the satellite toward the earth, a satellite antenna beam irradiating a compound region which includes a land and an inner oceanic region enclosing the outer periphery of the land and which comprises the entire land and the inner oceanic region, and a satellite antenna beam irradiating only an outer oceanic region except those portions of the inner oceanic region which are in contact with the land. The frequency of the satellite antenna beam, which irradiates the compound region comprising the entire land and the inner oceanic region, is set to be higher and wider in band than that of the satellite antenna beam which irradiates only the outer oceanic region.

Fig. 1 relates to the first embodiment of the present invention, while taking Japan as an example, which illustrates an exemplary arrangement of a compound satellite antenna beam comprising two beams of mutually different frequency bands and of different frequencies, one of the beams being a satellite antenna beam of a first frequency irradiating an inner oceanic region 1 with a borderline 2 bounded by one or more lands, the other beam being a satellite antenna beam of a second frequency irradiating an outer oceanic region 3 which is in contact with the inner oceanic region 1 through the borderline 2.

Such a configuration of the communication service area due to the arrangement of the satellite antenna beams and the settings of frequency bands and frequencies of the satellite antenna beams according to the first embodiment can be applied to Japan, the Commonwealth of Australia, the Republic of Philippines, the Republic of Indonesia, Formosa, etc., for example.

As described above, according to this first embodiment, in a satellite communication system in which communications are carried out between a communication device installed on a satellite and earth stations through wireless channels or links formed therebetween, a communication service area is constituted by arranging a compound antenna beam which comprises a satellite antenna beam irradiating an inner oceanic region including one or more lands, and a satellite antenna beam irradiating only an outer oceanic region, and additionally, the frequency of the satellite antenna beam irradiating the inner oceanic region including one or more lands is set to be higher and wider in band than that of the satellite antenna beam irradiating only the outer oceanic region.

With the above arrangement and settings, it is possible to reduce mutual interference in communications between communication service terminals on the land, and in communications between communication service terminals on the sea and in the air, thus providing an effect that a satellite communication system is achieved which is excellent in availability in wide areas, in easiness in the settings of communication channels or links, and in the wide-band characteristics.

That is, the frequency bands and the frequencies are different between the inner oceanic region including a land and the outer oceanic region, and hence mutual interference in these regions can be reduced. Moreover, it is possible to increase transmission capacity in the inner oceanic region by using a high frequency and a wide frequency band. Thus, it is possible to provide services for a lot of users and in wide areas as well. In addition, the lesser the interference, the lesser becomes the loss, thus making it easy to design communication channels or links.

### Embodiment 2.

According to a second embodiment of the present invention, a satellite communication system in which communications are carried out between a communication device installed on a satellite and earth stations through wireless channels or links formed therebetween, constitutes a communication service area by arranging a compound antenna beam comprising, as satellite antenna beams irradiated from the communication device installed on the satellite toward the earth, a satellite antenna beam irradiating an inner oceanic region including a land of which a part of the outer periphery is in contact with the inner oceanic region, and a satellite antenna beam irradiating only an outer oceanic region which is in contact with the inner oceanic region. In addition, the frequency of the satellite antenna beam, which irradiates the inner oceanic region including a part of the land and its periphery, is set to be higher and wider in band than that of the satellite antenna beam which irradiates only the outer oceanic region.

Fig. 2 relates to the second embodiment of the present invention, while taking South America as an example, which illustrates an exemplary arrangement of a compound satellite antenna beam comprising two beams of mutually different frequency bands and of different frequencies, one of the beams being a satellite antenna beam of a first frequency irradiating an inner oceanic region and a land 4 of which a part of the periphery is contact with the inner oceanic region, the other beam being a satellite antenna beam of a second frequency irradiating an outer oceanic region 3 which is in contact with the inner oceanic region through an arbitrary borderline 5.

Such a configuration of the communication service area due to the arrangement of the satellite antenna beams and the settings of frequency bands and frequencies of the satellite antenna beams according to the second embodiment can be applied to the Federative Republic of Brazil, the Republic of Korea, the People's Republic of China, the Republic of India, the Argentine Republic, the Republic of Peru, the Republic of Portugal, etc., for example.

As described above, in this second embodiment, in a satellite communication system in which communications are carried out between a communication device installed on a satellite and earth stations through wireless channels or links formed therebetween, a communication service area is constituted by arranging a compound antenna beam which comprises a satellite antenna beam irradiating an inner oceanic region including a land of which a part of the outer periphery is in contact with an ocean, and a satellite antenna beam irradiating only an outer oceanic region. In addition, the frequency of the satellite antenna beam, which irradiates the inner oceanic region including part of lands with their periphery in contact with an ocean, is set to be higher and wider in band than that of the satellite antenna beam which irradiates only the outer oceanic region.

With the above arrangement and settings, it is possible to reduce mutual interference in communications between communication service terminals on the land, and in communications between communication service terminals on the sea and in the air, thus providing an effect of achieving a satellite communication system which is excellent in availability in wide areas, in easiness in the settings of communication channels or links, and in the wide-band characteristics.

### Embodiment 3.

According to a third embodiment of the present invention, a satellite communication system in which communications are carried out between a communication device installed on a satellite and earth stations through wireless channels or links formed therebetween, constitutes a communication service area by arranging a compound antenna beam comprising a satellite antenna beam irradiating an inner oceanic region including a land of which two or more parts of the outer periphery are in contact with an inner ocean, and a satellite antenna beam irradiating only an outer oceanic region which is in contact with the inner oceanic region. In addition, the frequency of the satellite antenna beam, which irradiates the inner oceanic region including the land, is set to be higher and wider in band than that of the satellite antenna beam which irradiates only the outer oceanic region.

Fig. 3 relates to this third embodiment, while taking North America as an example, which illustrates an exemplary arrangement of a compound satellite antenna beam comprising two beams of mutually different frequency bands and of different frequencies, one of the beams being a satellite antenna beam of a first frequency irradiating an inner oceanic region 6 including a land of which two or more parts of the periphery is contact with an ocean, the other beam being a satellite antenna beam of a second frequency irradiating an outer oceanic region 3.

Such a configuration of the communication service area due to the arrangement of the satellite antenna beams and the settings of frequency bands and frequencies of the satellite antenna beams according to the second embodiment can be applied to the United States, Canada, the United Mexican States, the Republic of Panama, the Republic of Colombia, Spain, the French Republic, the old Soviet Union, etc., for example.

As described above, in this third embodiment, in a satellite communication system in which communications are carried out between a communication device installed on a satellite and earth stations through wireless channels or links formed therebetween, a communication service area is constituted by arranging a compound antenna beam which comprises a satellite antenna beam irradiating an inner oceanic region including a land of which two or more parts of the outer periphery are in contact with an ocean, and a satellite antenna beam irradiating only an outer oceanic region, In addition, the frequency of the satellite antenna beam, which irradiates the inner oceanic region including the land with two or more parts of its periphery in contact with an ocean, is set to be higher and wider in band than that of the satellite antenna beam which irradiates only the outer oceanic region.

With the above arrangement and settings, it is possible to reduce mutual interference in communications between communication service terminals on the land, and in communications between communication service terminals on the sea and in the air, thus providing an effect of achieving a satellite communication system which is excellent in availability in wide areas, in easiness in the settings of communication channels or links, and in the wide-band characteristics.

### INDUSTRIAL APPLICABILITY

As referred to above, according to the present invention, it i s possible to achieve a satellite communication system which is compatible with terrestrial wireless or radio communication systems, and which is excellent in availability in wide areas, in easiness in setting communications links or channels, and in wide-band characteristics, and which is capable of achieving large-capacity transmission with small-sized terminals in land regions as well as the minimization of interference to terrestrial wireless communication system in sea regions and in aerial regions.

## Claims

1. A satellite communication system in which communications are carried out between a communication device installed on a satellite and earth stations through wireless communication channels formed therebetween,
**characterized in that** it comprises, as satellite antenna beams irradiated from said communication device installed on said satellite toward the earth, a first satellite antenna beam irradiating an inner oceanic region at least including and contacting a land, and a second satellite antenna beam irradiating only an outer oceanic region which is in contact with said inner oceanic region, and
that said first and second satellite antenna beams together constitute a communication service area, and
that the frequency of said first satellite anten na beam is set to be higher and wider in band than that of said second satellite antenna beam.

2. The satellite communication system according to claim 1, **characterized in that** said first satellite antenna beam irradiates said inner oceanic region which includes one or more lands.

3. The satellite communication system according to claim 1, **characterized in that** said first satellite antenna beam irradiates said inner oceanic region which includes a land of which only a part of its periphery is in contact with said inner oceanic region.

4. The satellite communication system according to claim 1, **characterized in that** said first satellite antenna beam irradiates said inner oceanic region which includes a land of which two or more parts of its periphery are in contact with said inner oceanic region.
